# EUROPEAN PATENT APPLICATION

(11) **EP 2 184 563 A1**
(43) Date of publication of application: **12.05.2010**
(21) Application number: 08704399.8
(22) Date of filing: 04.02.2008
(51) Int. Cl.: F25B 29/00, F25B 7/00

(54) **AIR-CONDITIONING AND WATER-HEATING COMPLEX SYSTEM**

(71) Applicant: Mitsubishi Electric Corporation, Tokyo 100-8310 (JP)
(72) Inventor: AKAGI, Satoshi, Tokyo 100-8310 (JP); YAMASHITA, Kouji, Tokyo 100-8310 (JP); TANAKA, Kousuke, Tokyo 100-8310 (JP); KAMEYAMA, Junichi, Tokyo 100-8310 (JP); YABUUCHI, Hironori, Tokyo 100-8310 (JP)
(74) Representative: Pfenning, Meinig & Partner GbR
(86) International application number: PCT/JP2008/051722
(87) International publication number: WO 2009/098751

(57) **Abstract**

There is provided a heat pump apparatus allowing heating water to a high temperature by connecting one or a plurality of load-side units to one heat source-side unit. The air conditioning-hot water supply combined system 100 (heat pump apparatus) includes a heat source-side unit 10 equipped with an air conditioning compressor 101, a four-way valve 102, and an outdoor heat exchanger 103; and the load-side units 50 equipped with an air conditioning throttle means 117, an indoor heat exchanger 118, a second compressor 53, a second load-side heat exchanger 54, and a second flow rate control unit 55. Here, a main circuit A is configured by sequentially connecting the air conditioning compressor 101, the four-way valve 102, the outdoor heat exchanger 103, the air conditioning throttle means 117, and the indoor heat exchanger 118, using a high-pressure side connection piping 106 and a low-pressure side connection piping 107. On the other hand, a load-side refrigerant circuit B is configured by sequentially connecting the second compressor 53, a second load-side heat exchanger second load-side heat exchanger 54, the second flow rate control unit 55, and the indoor heat exchanger 118 using a load-side refrigerant piping 56.

## Description

### Technical Field

The present invention relates to an air conditioning-hot water supply combined system equipped with a heat pump cycle and capable of concurrently providing a cooling load, a heating load, and a hot water supply load. More specifically, the present invention pertains to an air conditioning-hot water supply combined system that implements energy saving while concurrently satisfying a demand for supplying a high temperature hot water.

### Background Art

Hitherto, there is air conditioning-hot water supply combined system capable of concurrently providing a cooling load, a heating load, and a hot water supply load by a unitary refrigeration cycle. As such, there is proposed a multifunctional heat pump system that is constituted of a refrigerant circuit configured that is provided with a compressor, and connected with an outdoor heat exchanger, an indoor heat exchanger, a cold heat storage tank, and a hot water supply heat exchanger, and that makes up a refrigeration cycle enabling individual operations of cooling, heating, hot water supply, heat storage, and cold storage, as well as enabling a combined operation thereof, by switching the refrigerant flow to the respective heat exchangers (refer to, for example, Patent Document 1).

Furthermore, there is an air conditioning-hot water supply combined systems capable of concurrently providing a high-temperature hot water supply and an indoor air conditioning function by a binary refrigeration cycle. As such, there is proposed a heat pump type hot water supply apparatus including: a lower-stage side refrigerant circuit, in which a first compressor, a refrigerant distributor, a first heat exchanger, a second heat exchanger, a first throttle device, an outdoor heat exchanger, a four-way valve, and the above-described first compressor are connected in this order, from the refrigerant distributor, the four-way valve, an indoor heat exchanger, and a second throttle device are infixed in this order to be connected between the second heat exchanger and the first throttle device, and a first refrigerant is made to flow, a higher-stage side refrigerant circuit, in which a second compressor, a condenser, a third throttle device, the first heat exchanger, and the second compressor are connected in this order, and a second refrigerant is made to flow, and a hot water supply path through which the second heat exchanger and the condenser are connected in this order, and hot water supply water is made to flow. (refer to, for example, Patent Document 2)

Moreover, there is proposed an air- conditioning hot-water supply system including: an air conditioner having an air conditioning refrigerant circuit to which a compressor, an outdoor heat exchanger, an expansion mechanism, and an indoor heat exchanger are connected, and a unit type hot water supplier having a hot water supply refrigerant circuit configured by sequentially connecting a compressor, a first heat exchanger, an expansion mechanism, and a second heat exchanger, and being filled with carbon dioxide refrigerant, wherein the first heat exchanger is connected to a hot water circuit for hot water supply for generating hot water from water and water in the hot water circuit for hot water supply and the carbon dioxide refrigerant are configured to be heat-exchangeable, and the second heat exchanger includes a heat radiating portion connected in parallel to an indoor heat exchanger in a refrigerant circuit for air conditioning and a heat absorbing portion connected to the hot water supply refrigerant circuit, and constituted by a cascade heat exchanger, in which heat exchange is performed between the refrigerant in the lower-stage side refrigerant circuit and the carbon dioxide refrigerant (refer to, for example, Patent Document 3).

[Patent Document 1] Japanese Unexamined Patent Application Publication No. 11-270920 (pp. 3 to 4; Fig. 1)
[Patent Document 2] Japanese Unexamined Patent Application Publication No. 4-263758 (pp. 2 to 3; Fig. 1)
[Patent Document 3] Japanese Unexamined Patent Application Publication No. 2004-132647 (pp. 6 to 8; Fig. 1)

### Disclosure of Invention

### Problems to be Solved by the Invention

A multifunctional heat pump system set forth in Patent Document 1 is intended to concurrently provide a cooling load, a heating load, and a hot water supply load by a unitary refrigeration cycle, i.e., one refrigeration cycle. However, in such a system, the temperature in a heat radiation process wherein water is heated and the temperature in a heat radiation process wherein air heating is performed becomes approximately the same, causing a problem that it is impossible to cover a high-temperature hot water supply load, or that the temperature in the heat radiation process of an indoor unit performing heating operation also needs to be elevated, which results in a significant reduction in COP (coefficient of performance).

The heat pump type hot water supply apparatus set forth in Patent Document 2 is intended to concurrently provide a cooling load, a heating load, and a hot water supply load by a binary refrigeration cycle, i.e., two refrigeration cycles. However, in such a system, the refrigerant circuit performing air conditioning by the indoor unit and the refrigerant circuit performing hot water supply are handled differently from each other. This posed a problem that a hot water supplying function cannot be added simply as an alternative for the indoor unit, thereby making it impossible to easily introduce this system into existing air conditioners.

The air-conditioning hot-water supply system set forth in Patent Document 3 is intended to concurrently provide a cooling load, a heating load, and a hot water supply load by a binary refrigeration cycle, or two refrigeration cycles. Although such a system is operable to concurrently provide the heating load and the hot water supply load, but is not configured to be able to provide the heating load and the hot water supply load concurrently with the cooling load. This raised an issue that an energy-saving operation in which exhaust heat from one side is utilized as a heat source on the other side, is not feasible.

The present invention is made to solve the above-described problems. An object of the present invention is to provide an air conditioning-hot water supply combined system that makes energy saving feasible while concurrently providing a cooling load, a heating load, and a high-temperature hot water supply load. Another object of the present invention is to provide an air conditioning-hot water supply combined system capable of being easily introduced into existing air conditioners.

### Means for Solving the Problems

The air conditioning-hot water supply combined system according to the present invention includes: an air conditioning refrigeration cycle that circulates an air conditioning refrigerant in a first refrigerant circuit in which an air conditioning compressor, flow path changeover means, an outdoor heat exchanger, an indoor heat exchanger, and air conditioning throttle means are connected in series, and a refrigerant-refrigerant heat exchanger and hot water supply heat source throttle means are connected in series to be connected to the indoor heat exchanger and air conditioning throttle means in parallel; and a hot water supply refrigeration cycle that circulates a hot water supply refrigerant in a second refrigerant circuit in which a hot water supply compressor, a heat medium-refrigerant heat exchanger, hot water supply throttle means, and the refrigerant-refrigerant heat exchanger are connected in series, wherein the air conditioning refrigeration cycle and the hot water supply refrigeration cycle are connected so that the air conditioning refrigerant and the hot water supply refrigerant exchange heat therebetween by the refrigerant-refrigerant heat exchanger.

### Advantages

According to the air conditioning-hot water supply combined system according to the present invention, since heat that is discharged in the air is collected and reused for hot water supply while concurrently providing a cooling load, a heating load, and a high-temperature hot water supply load, it is possible to significantly increase system COP to thereby realize energy saving.

### Brief Description of Drawings

[Fig. 1] Fig. 1 is a refrigerant circuit diagram showing a refrigerant circuit configuration of an air conditioning-hot water supply combined system according to Embodiment 1 of the present invention.
[Fig. 2] Fig. 2 is a Mollier diagram showing refrigerant states of an air conditioning refrigeration cycle at the time of a cooling-based operation.
[Fig. 3] Fig. 3 is a refrigerant circuit diagram showing a refrigerant circuit configuration of the air conditioning-hot water supply combined system according to Embodiment 1.
[Fig. 4] Fig. 4 is a Mollier diagram showing refrigerant states in an air conditioning refrigeration cycle at the time of a heating-based operation.
[Fig. 5] Fig. 5 is a refrigerant circuit diagram showing a refrigerant circuit configuration of the air conditioning-hot water supply combined system according to Embodiment 2 of the present invention.
[Fig. 6] Fig. 6 is a refrigerant circuit diagram showing a refrigerant circuit configuration of the air conditioning-hot water supply combined system according to Embodiment 2.
[Fig. 7] Fig. 7 is a refrigerant circuit diagram showing a refrigerant circuit configuration of the air conditioning-hot water supply combined system according to Embodiment 3 of the present invention.
[Fig. 8] Fig. 8 is a refrigerant circuit diagram showing a refrigerant circuit configuration of the air conditioning-hot water supply combined system according to Embodiment 4 of the present invention.

### Reference Numerals

1 air conditioning refrigeration cycle
1a air conditioning refrigeration cycle
2 hot water supply refrigeration cycle
3 hot water supply water circulation cycle
21 hot water supply compressor
22 hot water supply throttle means
23 hot water supply low-pressure side pressure detecting means
24 hot water supply high-pressure side pressure detection means
25 hot water supply control means
26 hot water supply communication means
27 hot water supply calculation means
28 hot water supply storage means
31 water circulation pump
32 hot water storage tank
33 hot water delivery temperature detection means
41 refrigerant-refrigerant heat exchanger
51 heat medium-refrigerant heat exchanger
100 air conditioning-hot water supply combined system
100a air conditioning-hot water supply combined system
100b air conditioning-hot water supply combined system
100c air conditioning-hot water supply combined system
101 air conditioning compressor
102 four-way valve
103 outdoor heat exchanger
104 accumulator
105a check valve
105b check valve
105c check valve
105d check valve
105e check valve
106 high-pressure side connection piping
107 low-pressure side connection piping
108 gas-liquid separator
109 first distribution portion
109a valve means
109b valve means
110 second distribution portion
110a check valve
110b check valve
111 first internal heat exchanger
112 first relay unit throttle means
113 second internal heat exchanger
114 second relay unit throttle means
115 first meeting portion
116 second meeting portion
117 air conditioning throttle means
118 indoor heat exchanger
119 hot water supply heat source throttle means
120 air conditioning control means
121 air conditioning communication means
122 air conditioning calculation means
123 air conditioning storage means
124 first heat source unit throttle means
125 air conditioning suction gas piping
126 air conditioning suction gas piping
127 air conditioning liquid piping
128 second heat source unit throttle means
130 first connection piping
131 second connection piping
132 connection piping
133 connection piping
133a connection piping
133b connection piping
134 connection piping
134a connection piping
134b connection piping
135 connection piping
135a connection piping
135b connection piping
136 connection piping
136a connection piping
136b connection piping
140 discharge-side piping
140a discharge-side piping
140b discharge-side piping
141 bypass pipe
200 hot power supply refrigeration cycle cabinet
201 connection valve
202 connection valve
203 connection valve
204 connection valve
205 connection valve
206 connection valve
207 connection valve
208 connection valve
A heat source unit
A₂ heat source unit
B cooling indoor unit
C heating indoor unit
D hot water supply heat source circuit
E relay unit
E₂ relay unit

### Best Modes for Carrying Out the Invention

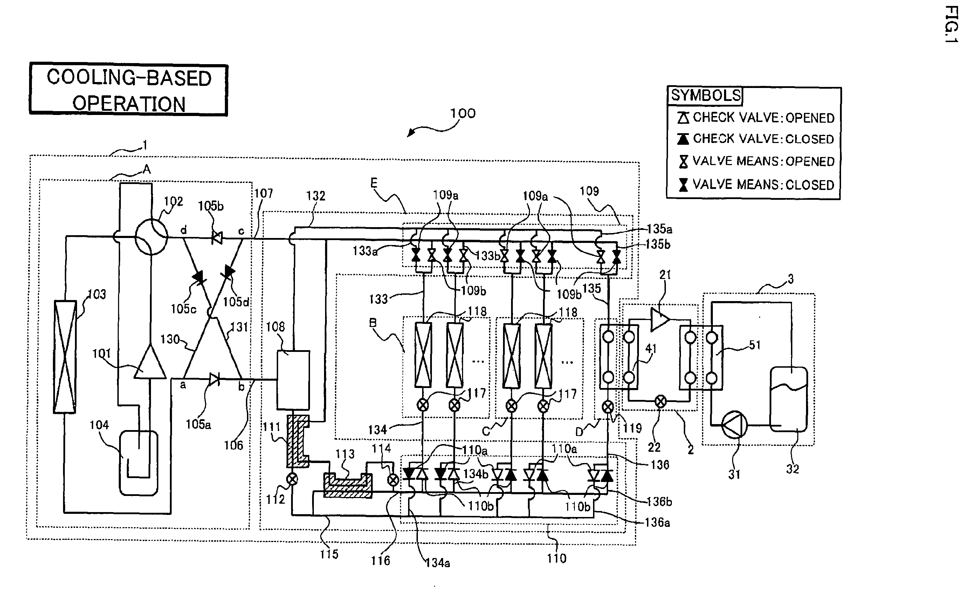

Hereinafter, embodiments according to the present invention will be described with reference to the drawings. Embodiment 1
Fig. 1 is a refrigerant circuit diagram showing a refrigerant circuit configuration (especially, the refrigerant circuit configuration at the time of the cooling-based operation) of an air conditioning-hot water supply combined system 100 according to Embodiment 1 of the present invention. With reference to Fig. 1, description is made of a refrigerant circuit configuration of the air conditioning-hot water supply combined system 100, especially the refrigerant circuit configuration at the time of the cooling-based operation. The air conditioning-hot water supply combined system 100 is installed in a building, a condominium building or the like, and is operable to concurrently provide a cooling load, a heating load, and a hot water supply load by utilizing a refrigeration cycle (heat pump cycle) circulating a refrigerant (air conditioning refrigerant). In the following figures including Fig. 1, the size relationships among constituent members may be different from actual ones.

In Fig. 1, in an air conditioning refrigeration cycle 1, the load for a cooling indoor unit B is higher than the total of the loads for a heating indoor unit C and a hot water supply heat source circuit D. That is, Fig. 1 indicates the state of a cycle in the case when an outdoor heat exchanger 103 functions as a radiator (referred to a "cooling-based operation" for convenience). The air conditioning-hot water supply combined system 100 according to Embodiment 1 is configured by connecting an air conditioning refrigeration cycle 1, a hot water supply refrigeration cycle 2, and a hot water supply water circulation cycle 3 by connection piping such as a high-pressure side connection piping 106 and a lower-pressure side connection piping 107. It is configured that the air conditioning refrigeration cycle 1 and the hot water supply refrigeration cycle 2 exchange heat therebetween by a refrigerant-refrigerant heat exchanger 41, and the hot water supply refrigeration cycle 2 and the hot water supply water circulation cycle 3 exchange heat therebetween by a heat medium-refrigerant heat exchanger 51 without refrigerants and being mixed each other.

### [Air Conditioning Refrigeration Cycle 1]

The air conditioning refrigeration cycle 1 is constituted of a heat source unit A, a cooling indoor unit B taking charge of a cooling load, a heating indoor unit C taking charge of a heating load, a hot water supply heat source circuit D serving as a heat source for the hot water supply refrigeration cycle 2, and a relay unit E. Among them, the cooling indoor unit B, the heating indoor unit C, and the hot water supply heat source circuit D are connected and installed so as to be in parallel to the heat source unit A. The relay unit E disposed between the heat source unit A and the cooling indoor unit B, the heating indoor unit C, and the hot water supply heat source circuit D, is designed to cause the cooling indoor unit B, the heating indoor unit C, and the hot water supply heat source circuit D to exert their respective functions.

### [Heat Source Unit A]

The heat source unit A is configured by connecting an air conditioning compressor 101, a four-way valve 102 serving as flow path changeover means, an outdoor heat exchanger 103, and an accumulator 104 in series. The heat source unit A has a function of supplying cold heat to the cooling indoor unit B, the heating indoor unit C, and the hot water supply heat source circuit D. In the vicinity of the outdoor heat exchanger 103, there is preferably provided an air blower such as a fan for supplying air to the outdoor heat exchanger 103. In the heat source unit A, a high-pressure side connection piping 106 and a lower-pressure side connection piping 107 are connected by a first connection piping 130 and a second connection piping 131.

In the cooling-based operation, the connection portion (hereinafter, simply referred to as a "connection portion a") between the high-pressure side connection piping 106 and the first connection piping 130 is located on the upstream side of the connection portion (hereinafter, simply referred to as a "connection portion b") between the high-pressure side connection piping 106 and the second connection piping 131. On the other hand, the connection portion (hereinafter, simply referred to as a "connection portion c") between the low-pressure side connection piping 107 and the first connection piping 130 is located on the upstream side of the connection portion (hereinafter, simply referred to as a "connection portion d") between the low-pressure side connection piping 107 and the second connection piping 131.

In the first connection piping 130, there is provided a check valve 105c permitting a flow of the air conditioning refrigerant only in the direction from the low-pressure side connection piping 107 toward the high-pressure side connection piping 106. Likewise, in the second connection piping 131, there is provided a check valve 105d allowing a flow of the air conditioning refrigerant only in the direction from the low-pressure side connection piping 107 toward the high-pressure side connection piping 106. Moreover, between the connection portion a and the connection portion b of the high-pressure side connection piping 106, there is provided a check valve 105a allowing a flow of the air conditioning refrigerant only in a predetermined direction (the direction from the heat source unit A toward the relay unit E). On the other hand, between the "connection portion c" and the connection portion d of the low-pressure side connection piping 107, there is provided a check valve 105b allowing a flow of the air conditioning refrigerant only in a predetermined direction (the direction from the relay unit E toward the heat source unit A).

The air conditioning compressor 101 is operative to suck-in the air conditioning refrigerant and compress it into a high-temperature and high-pressure state. Preferably, the air conditioning compressor 101 is, for example, a type whose rotation number is controlled by an inverter. The four-way valve 102 is operative to changeover the flow of the air conditioning refrigerant. The outdoor heat exchanger 103 functions as an evaporator and a radiator (condenser), and exchanges heat between the air supplied from an air blower (not shown) and the air conditioning refrigerant, to thereby change the air conditioning refrigerant to evaporated gas or condensation liquid. The accumulator 104 is disposed between the four-way valve 102 and the air conditioning compressor 101 in the cooling-based operation and stores excessive air conditioning refrigerant. The accumulator 104 may be any container as long as it can store excessive air conditioning refrigerant.

### [Cooling Indoor Unit B and Heating Indoor Unit C]

In the cooling indoor unit B and the heating indoor unit C, the air conditioning throttle means 117 and the indoor heat exchanger 118 are serally connected and installed. A case is illustrated by way of example, in which in the cooling indoor unit B and the heating indoor unit C, two air conditioning throttle means 117 and two indoor heat exchangers 118 are connected in parallel and installed respectively. The cooling indoor unit B has a function of receiving cold heat supply from the heat source unit A and taking charge of a cooling load, while the heating indoor unit C has a function of receiving cold heat supply from the heat source unit A and taking charge of a heating load.

In short, a state is shown, in which the cooling indoor unit B is determined by the relay unit E to take charge of a cooling load, and the heating indoor unit C is determined thereby to take charge of a heating load. In the vicinity of the indoor heat exchanger 118 there may be provided an air blower such as a fan for supplying air to the indoor heat exchanger 118. For convenience of explanation, connection piping connected from the relay unit E to the indoor heat exchanger 118 is referred to as a "connection piping 133", and connection piping connected frpm the relay unit E to the air conditioning throttle means 117 is referred to as a "connection piping 134".

The air conditioning throttle means 117 functions as a decompression valve and expansion valve, and decompresses the air conditioning refrigerant to expand it. The air conditioning throttle means 117 is preferably constituted by means whose degree of opening is variably controllable, such as precise flow rate control means by an electronic expansion valve and inexpensive refrigerant flow rate regulating means such as a capillary, for example. The indoor heat exchanger 118 functions as a radiator (condenser) and an evaporator, and exchanges heat between the air supplied from air blowing means (not shown) and the air conditioning refrigerant, to thereby change the air conditioning refrigerant to condensation liquid or evaporation. Here, the air conditioning throttle means 117 and the indoor heat exchangers 118 are connected in series.

### [Hot Water Supply Heat Source Circuit D]

The hot water supply heat source circuit D is configured by connecting hot water supply heat source throttle means 119 and the refrigerant-refrigerant heat exchanger 41 in series, and has a function of supplying cold heat from the heat source unit A to the hot water supply refrigeration cycle 2 via the refrigerant-refrigerant heat exchanger 41. That is, the air conditioning refrigeration cycle 1 and the hot water supply refrigeration cycle 2 are cascade-connected in the refrigerant-refrigerant heat exchanger 41. For convenience of explanation, connection piping connecting from the relay unit E to the refrigerant-refrigerant heat exchanger 41 is referred to as a connection piping 135, and connection piping connecting from the relay unit E to the hot water supply heat source throttle means 119 is referred to as a "connection piping 136".

As in the case of the air conditioning throttle means 117, the hot water supply heat source throttle means 119 functions as a decompression valve and an expansion valve, and decompresses the air conditioning refrigerant to expand it. The hot water supply heat source throttle means 119 is preferably constituted by means whose degree of opening is variably controllable, such as precise flow rate control means by an electronic expansion valve, and inexpensive refrigerant flow rate regulating means such as a capillary, for example. The refrigerant-refrigerant heat exchanger 41 functions as a radiator (condenser) and an evaporator, and exchanges heat between the hot water supply refrigerant circulating in the refrigeration cycle of the hot water supply refrigeration cycle 2 and the air conditioning refrigerant circulating in the refrigeration cycle of the air conditioning refrigeration cycle 1.

### [Relay Unit E]

The relay unit E has a function of connecting each of the cooling indoor unit B, the heating indoor unit C, and the hot water supply heat source circuit D to the heat source unit A. The relay unit E also has a function of, determining whether the indoor heat exchanger 118 and the refrigerant-refrigerant heat exchanger 41 to be connected are to be a cooling unit (water cooler) or a heating unit (water heater) by alternatively opening/closing any of the valve means 109a and the valve means 109b of a first distribution portion 109. The relay unit E is constituted of a gas-liquid separator 108, the first distribution portion 109, a second distribution portion 110, a first internal heat exchanger 111, a first relay unit throttle means 112, a second internal heat exchanger 113, and a second relay unit throttle means 114.

In the first distribution portion 109, the connection piping 133 and the connection piping 135 are branched into two. One (connection piping 133b and connection piping 135b) is connected to the low-pressure side connection piping 107, while the other (connection piping 133a and connection piping 135a) is connected to connection piping (referred to as connection piping 132, which is connected with the gas-liquid separator 108. Furthermore, in the first distribution portion 109, valve means 109a is provided with connection piping 133a and connection piping 135a, and valve means 109b is provided with connection piping 133b and connection piping 135b.

In the second distribution portion 110, connection piping 134 and connection piping 136 are each branched into two. One (connection piping 134a and connection piping 136a) is connected with a first meeting portion 115, while the other (connection piping 134b and connection piping 136b) is connected with a second meeting portion 116. Furthermore, in the second distribution portion 110, a check valve 110a is provided with connection piping 134a and connection piping 136a, and a check valve 110b is provided with connection piping 134b and connection piping 136b, resopectively.

The first meeting portion 115 is connected between the second distribution portion 110 and the gas-liquid separator 108 via the first relay unit throttle means 112 and the first internal heat exchanger 111. The second meeting portion 116 branches into two between the second distribution portion 110 and the second internal heat exchanger 113. One of the branched portions is connected to the first meeting portion 115 between the second distribution portion 110 and the first relay unit throttle means 112 via second internal heat exchanger 113. The other of the branched portions (a second meeting portion 116a) is connected to the low-pressure side connection piping 107 via the second relay unit throttle means 114, the second internal heat exchanger 113, and the first internal heat exchanger 111.

The gas-liquid separator 108 is operative to separate the air conditioning refrigerant into a gas refrigerant and a liquid refrigerant, and is provided with the high-pressure side connection piping 106. One is connected to the valve means 109a in the first distribution portion 109, and the other is connected to the second distribution portion 110 via the first meeting portion 115. The first distribution portion 109 has a function of allowing the air conditioning refrigerant to flow into the indoor heat exchanger 118 and the refrigerant-refrigerant heat exchanger 41 by alternatively opening/closing either of the valve means 109a or the valve means 109b. The second distribution portion 110 has a function of permitting the flow of the air conditioning refrigerant into either direction by the check valve 110a and the check valve 110b.

The first internal heat exchanger 111 is provided in the first meeting portion 115 between the gas-liquid separator 108 and the first relay unit throttle means 112, and performs heat exchange between the air conditioning refrigerant passing through the first meeting portion 115 and the air conditioning refrigerant passing through the second meeting portion 116a, which is branched from the second meeting portion 116. The first relay unit throttle means 112 is provided in the first meeting portion 115 between the first internal heat exchanger 111 and the second distribution portion 110, and is operative to decompress the air conditioning refrigerant to expand it. The first relay unit throttle means 112 is preferably constituted by means whose degree of opening is variably controllable, such as precise flow rate control means by an electronic expansion valve and inexpensive refrigerant flow rate regulating means such as a capillary, for example.

The second internal heat exchanger 113 is provided in the second meeting portion 116, and performs heat exchange between the air conditioning refrigerant passing through the second meeting portion 116 and the air conditioning refrigerant passing through the second meeting portion 116a, which is branched from the second meeting portion 116. The second relay unit throttle means 114 is provided in the second meeting portion 116 between the second internal heat exchanger 113 and the second distribution portion 110, and functions as a decompression valve and an expansion valve, to decompress the air conditioning refrigerant and expand it. As in the case of the first relay unit throttle means 112, the second relay unit throttle means 114 is preferably constituted by means whose degree of opening is variably controllable, such as precise flow rate control means by an electronic expansion valve and inexpensive refrigerant flow rate regulating means such as a capillary, for example.

As described above, the air conditioning refrigeration cycle 1 makes up a first refrigerant circuit by connecting the air conditioning compressor 101, the flow path changeover means 102, the outdoor heat exchanger 103, the indoor heat exchanger 118, and the air conditioning throttle means 117 in series, and connecting the refrigerant-refrigerant heat exchanger 41 and the hot water supply heat source throttle means 119 in series the indoor heat exchanger 118 and air conditioning throttle means 117 being connected in parallel thereto. By circulating the air conditioning refrigerant in the above-described first refrigerant circuit, the air conditioning refrigeration cycle 1 is established.

Here, the cooling-based operation of the air conditioning refrigeration cycle 1 will be described.

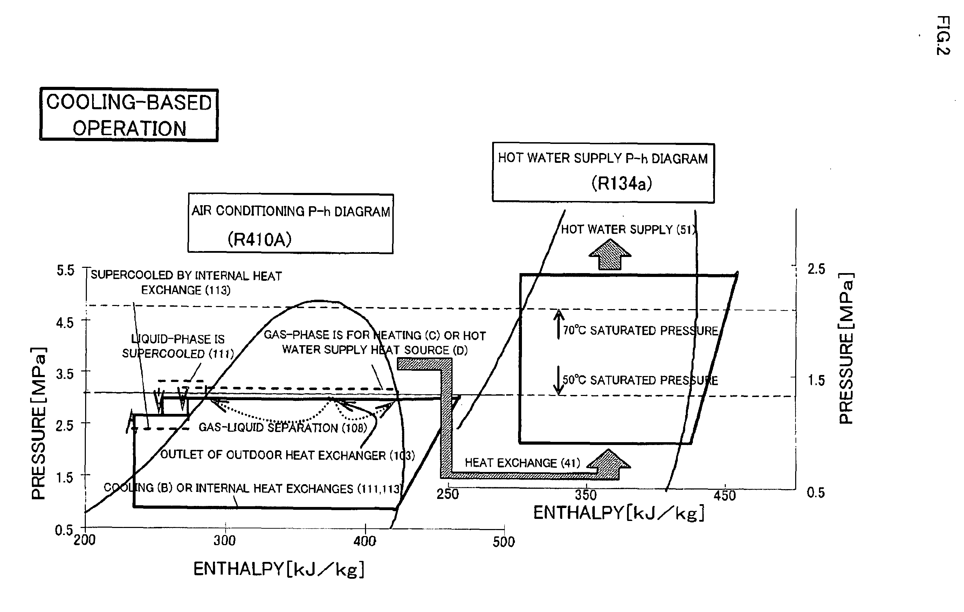

Fig. 2 is a Mollier diagram (P-H diagram) showing refrigerant states of the air conditioning refrigeration cycle 1 at the time of the cooling-based operation. With reference to Figs. 1 and 2, description is made of operation of the air conditioning refrigeration cycle 1 in the air conditioning-hot water supply combined system 100. In Fig. 2, the vertical axis represents an absolute pressure (MPa), and the horizontal axis represents a specific enthalpy (kJ/kg). Fig. 2 indicates that: the air conditioning refrigerant is in a gas-liquid two-phase state in the portion enclosed by the saturated liquid line and the saturated vapor line; it is in a liquid state on the left side of the saturated liquid line; and it is in a gas state on the right side of the saturated vapor line. Here, a case in which, in the air conditioning refrigeration cycle 1, R410A is used as an air conditioning refrigerant, is shown by way of example.

At first, the air conditioning refrigerant brought into a high-temperature and high-pressure state by the air conditioning compressor 101 is discharged from the air conditioning compressor 101, and flows into the outdoor heat exchanger 103 via the four-way valve 102. In the outdoor heat exchanger 103, the air conditioning refrigerant that flowed therein exchanges heat with outdoor air and radiates heat. The air conditioning refrigerant that flowed out from the outdoor heat exchanger 103 passes through the check valve 105a, and being introduced into the high-pressure side connection piping 106, and reaches the gas-liquid separator 108 of the rely unit E. The air conditioning refrigerant that flowed into the gas-liquid separator 108 is separated into a gas-phase air conditioning refrigerant and a liquid-phase air conditioning refrigerant.

Saturated vapor (the gas-phased air conditioning refrigerant) is distributed among circuits with the valve means 109a in the first distribution portion 109 being open. Here, the saturated vapor is adapted to flow into the heating indoor unit C and the hot water supply heat source circuit D. The air conditioning refrigerant that flowed into the heating indoor unit C radiates heat in the indoor heat exchangers 118 (that is, heats the indoor air), being decompressed by the air conditioning throttle means 117, and meets in the first meeting portion 115. On the other hand, the air conditioning refrigerant that flowed into the hot water supply heat source circuit D radiates heat in the refrigerant-refrigerant heat exchanger 41 (that is, supplies heat to the hot water supply refrigeration cycle 2), being decompressed by the hot water supply heat source throttle means 119, and meets the air conditioning refrigerant that flowed out from the heating indoor unit C, at the first meeting portion 115.

On the other hand, the saturated liquid (the liquid-phase air conditioning refrigerant) exchanges heat in the first internal heat exchanger 111 with the air conditioning refrigerant that expanded into a low-temperature and low-pressure state by the second relay unit throttle means 114, to thereby obtain a supercooling degree. Then, the saturated liquid passes through the first relay unit throttle means 112, and meets the refrigerant used for air conditioning in the first meeting portion 115 (the air conditioning refrigerant that flowed into the heating indoor unit C and the hot water supply heat source circuit D, and that has radiated heat in the indoor heat exchanger 118 and the refrigerant-refrigerant heat exchanger 41). Thereafter, the air conditioning refrigerant that met at the first meeting portion 115 exchanges heatwith the air conditioning refrigerant that expanded into a low-temperature and low-pressure state by the second relay unit throttle means 114 to thereby obtain a supercooling degree in the second internal heat exchanger 113. This air conditioning refrigerant is distributed between the second meeting portion 116 side and the second relay unit throttle means 114 side.

The air conditioning refrigerant passing through the second meeting portion 116 is distributed among circuits with the valve means 109b being open. Here, the air conditioning refrigerant passing through the second meeting portion 116 is adapted to flow into the cooling indoor unit B. The air conditioning refrigerant that flowed into the cooling indoor unit B is expanded into a low-temperature and low-pressure state by the air conditioning throttle means 117, evaporates in the indoor heat exchangers 118, and meets in the lower pressure side connection piping 107 via the valve means 109b. On the other hand, the air conditioning refrigerant that passed through the second relay unit throttle means 114 exchanges heat in the second internal heat exchanger 113 and the first internal heat exchanger 111 to thereby evaporate, and meets the air conditioning refrigerant that flowed out from the cooling indoor unit B in the lower pressure side connection piping 107. Then, the air conditioning refrigerant that met in the lower pressure side connection piping 107 is led to the four-way valve 102 through the check valve 105d, and returns to the air conditioning compressor 101 via the accumulator 104.

Next, the heating-based operation of the air conditioning refrigeration cycle 1 will be described.

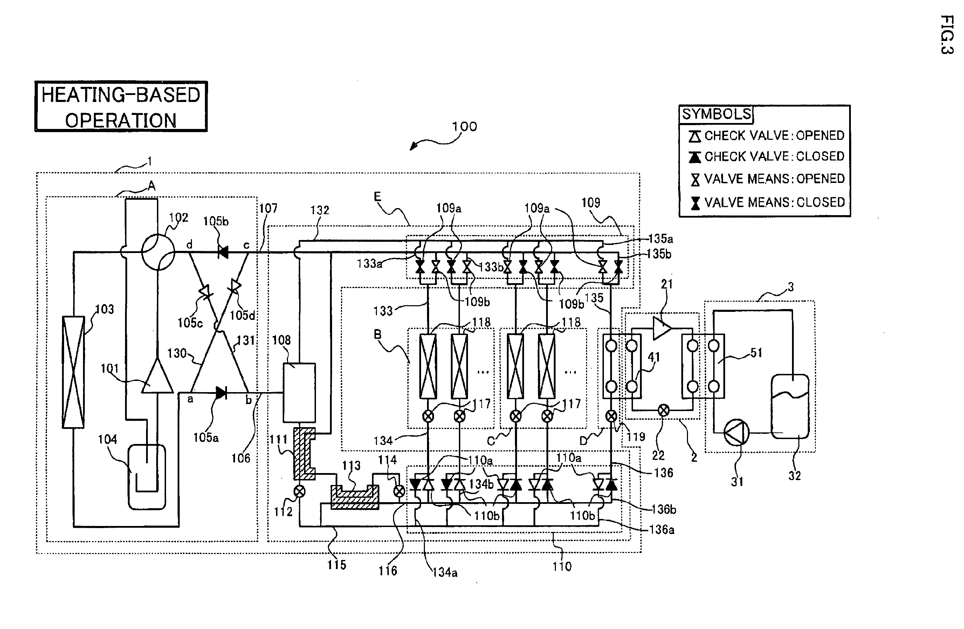

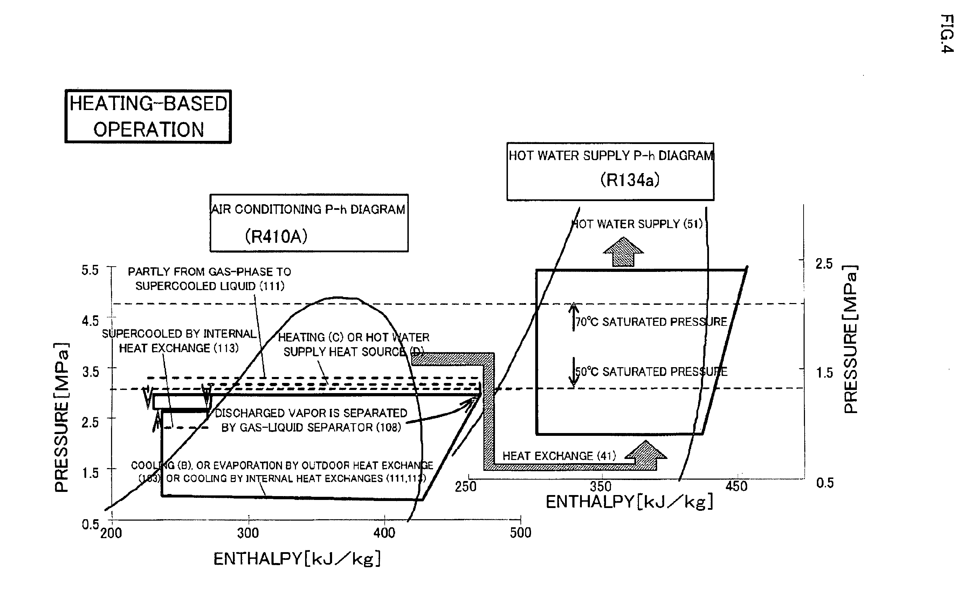

Fig. 3 is a refrigerant circuit diagram showing a refrigerant circuit configuration (especially, the refrigerant circuit configuration at the time of the heating-based operation) of the air conditioning-hot water supply combined system 100 according to Embodiment 1 of the present invention. Fig. 4 is a Mollier diagram showing refrigerant states of the air conditioning refrigeration cycle at the time of the heating-based operation. With reference to Figs. 3 and 4, description is made of the heating-based operation of the air conditioning refrigeration cycle 1 in the air conditioning-hot water supply combined system 100.

In Fig. 3, in the air conditioning refrigeration cycle 1, the load for the cooling indoor unit B is lower than the total of the loads for the heating indoor unit C and the hot water supply heat source circuit D. So that, a state of a cycle (referred to as a "heat-based operation" for convenience) is shown in which an outdoor heat exchanger 103 functions as an evaporator. In Fig. 4, the vertical axis represents the absolute pressure (MPa), and the horizontal axis represents the specific enthalpy (kJ/kg). It is also indicated that the air conditioning refrigerant is in a gas-liquid two-phase state in the portion enclosed by a saturated liquid line and a saturated vapor line on the left side of the saturated liquid line is in a liquid state, and on the right side of the saturated vapor line is in a gas state. Here, a case is shown by way of example, in which R410A is used in the air conditioning refrigeration cycle 1 as an air conditioning refrigerant.

First, the air conditioning refrigerant turned into a high-temperature and high-pressure state by the air conditioning compressor 101 is discharged from the air conditioning compressor 101, and after passing through the check valve 105c via the four-way valve 102, it is led into the high pressure side connection piping 106 to flow into the gas-liquid separator 108 of the relay unit E in a superheated gas state. The air conditioning refrigerant in the superheated gas state, flowed into the gas-liquid separator 108 is distributed into circuits with the valve means 109a of the first distribution portion 109 being open. Here, the air conditioning refrigerant in the superheated gas state is adapted to flow into the heating indoor unit C and the hot water supply heat source circuit D.

The air conditioning refrigerant that flowed into the heating indoor unit C radiates heat in the indoor heat exchangers 118 (that is, heats the indoor air), and being decompressed by the air conditioning throttle means 117 to meet in the first meeting portion 115. On the other hand, the air conditioning refrigerant that flowed into the hot water supply heat source circuit D radiates heat in the refrigerant-refrigerant heat exchanger 41 (that is, supplies heat to the hot water supply refrigeration cycle 2), and after being decompressed by the hot water supply heat source throttle means 119 to meet the air conditioning refrigerant flowed out from the heating indoor unit C in the first meeting portion 115. Meanwhile, part of the air conditioning refrigerant in a superheated gas state flowed into the gas-liquid separator 108 exchanges heat in the first internal heat exchanger 111 with the air conditioning refrigerant that expanded into a low-temperature and low-pressure state by the second relay unit throttle means 114, to thereby obtain a supercooling degree.

Then, the part of the air conditioning refrigerant in the superheated gas state passes through the first relay unit throttle means 112, and meets the air conditioning refrigerant (the air conditioning refrigerant that flowed into the heating indoor unit C and the hot water supply heat source circuit D and radiated heat in the indoor heat exchanger 118 and the refrigerant-refrigerant heat exchanger 41) in the first meeting portion 115. Meanwhile, part of the air conditioning refrigerant in the superheated gas state passing through the first relay unit throttle means 112 may be nulled out by totally closing the first relay unit throttle means 112. Thereafter, a supercooling degree can be obtained by performing heat exchange with the air conditioning refrigerant that expanded into a low-temperature and low-pressure state by the second relay unit throttle means 114. This air conditioning refrigerant is distributed into the second meeting portion 116 side and the second relay unit throttle means 114 side.

The air conditioning refrigerant passing through the second meeting portion 116 is distributed into circuits with the valve means 109b opened. Here, the air conditioning refrigerant passing through the second meeting portion 116 is adapted to flow into the cooling indoor unit B. The air conditioning refrigerant that flowed into the cooling indoor unit B is expanded into a low-temperature and low-pressure state by the air conditioning throttle means 117, evaporates in the indoor heat exchangers 118, and meets in the low pressure side connection piping 107 via the valve means 109b. The air conditioning refrigerant that passed through the second relay unit throttle means 114 exchanges heat in the second internal heat exchanger 113 and the first internal heat exchanger 111 to evaporate, and meets the air conditioning refrigerant that flowed out of the cooling indoor unit B in the low pressure side connection piping 107. Then, the air conditioning refrigerant that met in the low pressure side connection piping 107 is led to the outdoor heat exchanger 103 through the check valve 105d, evaporates a remaining liquid refrigerant depending upon an operating condition, and returns to the air conditioning compressor 101 via the four-way valve 102 and the accumulator 104.

### [Hot Water Supply Refrigeration Cycle 2]

With reference to Figs. 1 and 3, the hot water supply refrigeration cycle 2 is described. The operation of the hot water supply refrigeration cycle 2 does not differ irrespective of the operating state of the air conditioning refrigeration cycle 1, i.e., irrespective of whether the air conditioning refrigeration cycle 1 is performing the cooling-based operation or the heating-based operation. As shown in Figs. 1 and 3, the hot water supply refrigeration cycle 2 is constituted of the hot water supply compressor 21, the heat medium-refrigerant heat exchanger 51, the hot water supply throttle means 22, and the refrigerant-refrigerant heat exchanger 41. That is, the hot water supply refrigeration cycle 2 makes up the second refrigerant circuit by connecting the hot water supply compressor 21, the heat medium-refrigerant heat exchanger 51, the hot water supply throttle means 22, and the refrigerant-refrigerant heat exchanger 41 in series, and by circulating the hot water supply refrigerant in the above-described second refrigerant circuit, the hot water supply refrigeration cycle 2 is established.

The hot water supply compressor 21 sucks-in a hot water supply refrigerant and compresses it into a high-temperature and high-pressure state. The hot water supply compressor 21 is preferably a type of which rotation speed is controlled by an inverter. The heat medium-refrigerant heat exchanger 51 exchanges heat between water (heat medium) circulating in the hot water supply water circulation cycle 3 and the hot water supply refrigerant circulating in the hot water supply refrigeration cycle 2. The hot water supply throttle means 22 functions as a decompression valve and an expansion valve, and decompresses the hot water supply refrigerant to expand it. The hot water supply throttle means 22 is preferably constituted by means of which the degree of opening is variably controllable, such as precise flow rate control means by an electronic expansion valve, for example, and inexpensive refrigerant flow rate regulating means such as a capillary. The refrigerant-refrigerant heat exchanger 41 exchanges heat between the hot water supply refrigerant circulating in the hot water supply refrigeration cycle 2 and the air conditioning refrigerant circulating in the air conditioning refrigeration cycle 1.

Here, the operation of the hot water supply refrigeration cycle 2 will be described.
In Figs. 2 and 4, Mollier diagrams (P-H diagrams) are illustrated showing refrigerant states in an hot water supply refrigeration cycle 2 at the times of cooling-based operation and the heating-based operation, respectively. With reference to Figs. 1 to 4, description is made of operation of the hot water supply refrigeration cycle 2 in the air conditioning-hot water supply combined system 100. It is indicated that: the hot water supply refrigerant is in a gas-liquid two-phase state in the portion enclosed by a saturated liquid line and a saturated vapor line; on the left side of the saturated liquid line is in a liquid state; and on the right side of the saturated vapor line is in a gas state. Here, a case wherein R134a is used as a hot water supply refrigerant in the hot water supply refrigeration cycle 2 is shown by way of example.

First, the hot water supply refrigerant brought into a high-temperature and high-pressure state by the hot water supply compressor 21 is discharged from the hot water supply compressor 21 and flows into the heat medium-refrigerant heat exchanger 51. In the heat medium-refrigerant heat exchanger 51, the hot water supply refrigerant therein heats the water circulating in the hot water supply water circulation cycle 3, to thereby radiate heat. This hot water supply refrigerant is expanded up to a temperature below the outlet temperature of the refrigerant-refrigerant heat exchanger 41 in the hot water supply heat source circuit D of the air conditioning refrigeration cycle 1 by the hot water supply throttle means 22. The expanded hot water supply refrigerant receives heat from the air conditioning refrigerant flowing in the hot water supply heat source circuit D in the refrigerant-refrigerant heat exchanger 41 to evaporate and returns to the hot water supply compressor 21.

### [Hot Water Supply Water Circulation Circle 3]

With reference to Figs. 1 and 3, the hot water supply water circulation cycle 3 will be described. The operation of the hot water supply water circulation cycle 3 does not vary irrespective of the operating state of the air conditioning refrigeration cycle 1, i.e., whether the air conditioning refrigeration cycle 1 is performing the cooling-based operation or the heating-based operation. As shown in Figs. 1 and 3, the hot water supply water circulation cycle 3 is constituted of a water circulation pump 31, the heat medium-refrigerant heat exchanger 51, and a hot water storage tank 32.

The water circulation pump 31 sucks in water stored in the hot water storage tank 32, pressurizes the water, circulate it in the hot water supply water circulation cycle 3. Preferably, the water circulation pump 31 is, for example, a type whose rotation number is controlled by an inverter. As described above, the heat medium-refrigerant heat exchanger 51 exchanges heat between the water (heat medium) circulating in the hot water supply water circulation cycle 3 and the hot water supply refrigerant circulating in the hot water supply refrigeration cycle 2. The hot water storage tank 32 is used for storing the water heated by the heat medium-refrigerant heat exchanger 51.

First, comparatively low temperature water that is stored in the hot water storage tank 32 is drawn out by the water circulation pump 31 from the bottom portion of the hot water storage tank 32, and obtains a water head. The water that obtained the water head flows into the heat medium-refrigerant heat exchanger 51, and receives heat in the heat medium-refrigerant heat exchanger 51 from the hot water supply refrigerant circulating in the hot water supply refrigeration cycle 2. That is, the water flowed into the heat medium-refrigerant heat exchanger 51 is boiled up by the hot water supply refrigerant circulating in the hot water supply refrigeration cycle 2 to rise its temperature. The boiled-up water returns to a comparatively high temperature upper portion of the hot water storage tank 32, being stored in the hot water storage tank 32.

In Embodiment 1, as shown in Figs. 1 and 3, the case where the water in the hot water storage tank 32 is directly heated by the heat medium-refrigerant heat exchanger 51, is explained by way of example. However, it is not limited thereto. One alternative method is that by making the water passing through the water circulation pump 31 and the heat medium-refrigerant heat exchanger 51 be a closed system independent of the water in the hot water storage tank 32, making the piping pass through the hot water storage tank 32, the water in the hot water storage tank 32 is reheated. In this case, the medium within the closed system may also be brine (antifreeze) or the like instead of water.

Furthermore, the check valve 105a, the check valve 105b, the check valve 105c, the check valve 105d, the check valves 110a, and the check valves 110b may be each constituted by valve means such as a solenoid valve to more reliably perform a switchover between refrigerant flow paths. Moreover, the air conditioning compressor 101 and the hot water supply compressor 21 may employ any of various types such as a reciprocating type, a rotary type, a scroll type, and a screw type. Besides, they are not limited to one whose rotation number is variable, but may be one whose rotation number is fixed.

The case in which the R410A is adopted for the air conditioning refrigerant circulating in the air conditioning refrigeration cycle 1, and the R134a is adopted for the hot water supply refrigerant circulating in the hot water supply refrigeration cycle 2, are explained by way of example. However, kinds of the refrigerants are not particularly limited. For example, any of natural refrigerant such as carbon dioxide (CO₂) hydrocarbon, and helium; alternative refrigerant containing no chrome, such as HFC410A, HFC407C, HFC404A; and fluorocarbon refrigerants, such as R22 or R134a, which are used in existing products, may be adopted. While the air conditioning refrigeration cycle 1 and the hot water supply refrigeration cycle 2 have an independent refrigerant circuit configuration, and the refrigerants circulating may be of the same kind or mutually different kinds. These refrigerants exchange heat therebetween in the refrigerant-refrigerant heat exchanger 41 and the heat medium-refrigerant heat exchanger 51 without being mixed with each other.

In a case where a refrigerant having a low critical temperature is used as a hot power supply refrigerant, when a high-temperature hot water is supplied, the hot water supply refrigerant in a heat radiating process in the heat medium-refrigerant heat exchanger 51 is assumed to turn into a supercritical state. However, in general, when the refrigerant in a heat radiating process is in a supercritical state, the fluctuation of the COP due to change in the radiator pressure and the radiator outlet temperature is large. In order to perform an operation for achieving a high COP, higher degree of control is desired. Furthermore, typically, because the refrigerant having a low critical temperature is high in saturated pressure with respect to the same temperature, the wall of pipings and the compressor must be made thicker correspondingly, which results in increase in cost.

In view of the fact that a recommended temperature of water stored in the hot water storage tank 32 is 60°C or above in order to prevent the breeding of legionella bacteria or the like, the target temperature of hot water is preferably 60°C at a minimum. On the basis of the above, it is desirable to adopt a refrigerant having a critical temperature of 60°C at a minimum for the hot water supply refrigerant. When using such a refrigerant as the hot water supply refrigerant for the hot water supply refrigeration cycle 2, a higher COP would be obtained more stably and at a lower cost.

In Embodiment 1, the case where the air conditioning refrigerant exchanges heat with air in the outdoor heat exchanger 103, is illustrated by way of example, but the present invention is not limited to this case. The air conditioning refrigerant may exchange heat with water, a refrigerant, brine or the like. Moreover, in Embodiment 1, as shown in Figs. 1 and 3, the case where the cooling indoor unit B and the heating indoor unit C are each equipped with two or more indoor heat exchangers 118, is shown, but the present invention is not limited to this case. For example, in the case of the cooling-based operation shown in Fig. 1, the number of the indoor heat exchangers 118 in the cooling indoor unit B may be one, and the number of the indoor heat exchangers 118 in the heating indoor unit C may be zero or one. Moreover, for example, in the case of the heating-based operation shown in Fig. 3, the number of the indoor heat exchangers 118 in the cooling indoor unit B and the heating indoor unit C may be zero or one.

The capacity of the indoor heat exchanger 118 in each of the cooling indoor unit B and the heating indoor unit C is not particularly restricted. The capacities of the respective indoor heat exchangers 118 may be different from each other, or may be the same. Furthermore, the case where in the air conditioning refrigeration cycle 1, excessive refrigerant is stored by the accumulator 104, but the present invention is not limited to this case. Upon removing the accumulator 104, excessive refrigerant may also be stored in heat exchangers serving as radiators in the air conditioning refrigeration cycle 1 (i.e., the outdoor heat exchanger 103, the indoor heat exchanger 118, the refrigerant-refrigerant heat exchanger 41, or the like).

In the air conditioning-hot water supply combined system 100 according to Embodiment 1, since the hot water supply load system is constituted by a binary cycle (the air conditioning refrigeration cycle 1 and the hot water supply refrigeration cycle 2), when serving a demand for high-temperature hot water supply (for example, hot water of 80°C or above), it suffices only to set the temperature of the radiator (heat medium-refrigerant heat exchanger 51) in the hot water supply refrigeration cycle 2 to a high temperature (for example, condensation temperature 85°C). Accordingly, when there is a demand for a heating load besides the demand for the hot water supply, it is allowable not to increase the condensation temperature (for example, 50°C) of the heating indoor unit C, which allows reduction in energy consumption.

Furthermore, for example, when there is a demand for high-temperature hot water supply during an air conditioning cooling operation in summer, it is necessary to address the hot water supply demand using a boiler or the like conventionally. However, in the air conditioning-hot water supply combined system 100 according to Embodiment 1, since heat discharged in the air is collected and reused for hot water supply, the system COP is significantly enhanced, leading to energy saving. Although one example of the present invention is explained above on the basis of the air conditioning-hot water supply combined system 100 according to Embodiment 1, the air conditioning refrigeration cycle 1 introducible into the air conditioning-hot water supply combined system 100 that produces effects of the present invention is not restricted to this example. As long as an arrangement capable of concurrently supplying a cooling function and a heating function, any arrangement may be adopted. For example, an arrangement shown in Embodiment 2 of the present invention as described below may be used.

### Embodiment 2

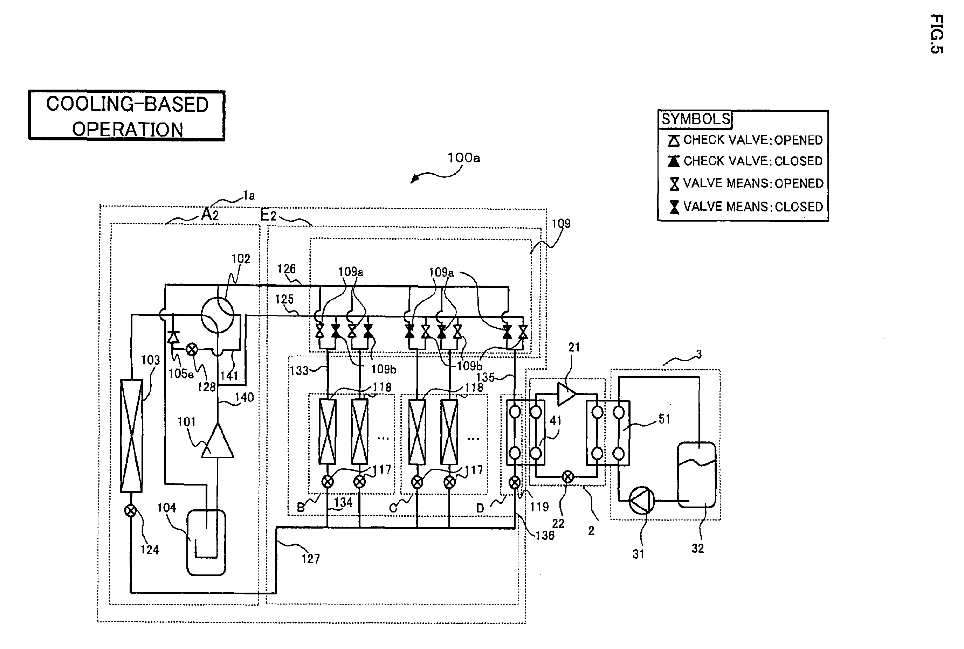

Fig. 5 is a refrigerant circuit diagram showing a refrigerant circuit configuration (especially, the refrigerant circuit configuration at the time of the cooling-based operation) in an air conditioning-hot water supply combined system 100a according to Embodiment 2 of the present invention. With reference to Fig. 5, description is made of a refrigerant circuit configuration of the air conditioning-hot water supply combined system 100a, especially the refrigerant circuit configuration at the time of the cooling-based operation. The air conditioning-hot water supply combined system 100a is installed in a building, a condominium building or the like, and is operable to concurrently provide a cooling load, a heating load, and a hot water supply load by utilizing a refrigeration cycle circulating a refrigerant (air conditioning refrigerant). Here, the description of Embodiment 2 is focused on its differences from the above-described Embodiment 1. The same parts as those in Embodiment 1 are designated by the same symbols, and description thereof is omitted.

As shown in Fig. 5, the air conditioning-hot water supply combined system 100a according to Embodiment 2 is **characterized in that** the heat source unit A₂ and the relay unit E₂ in an air conditioning refrigeration cycle 1a are configured differently from the heat source unit A and the relay unit E in the air conditioning refrigeration cycle 1 of the air conditioning-hot water supply combined system 100 according to Embodiment 1. Configurations other than the heat source unit A₂ and the relay unit E₂ (that is, the cooling indoor unit B, the heating indoor unit C, the hot water supply heat source circuit D, the hot water supply refrigeration cycle 2, and the hot water supply water circulation cycle 3) are configured to be similar to Embodiment 1.

### [Heat Source Unit A₂]

The heat source unit A₂ is constituted of the air conditioning compressor 101, the four-way valve 102, the outdoor heat exchanger 103, the first heat source unit throttle means 124, and the accumulator 104. As in the case of the heat source unit A, the heat source unit A₂ has a function of supplying cold heat to the cooling indoor unit B, the heating indoor unit C, and the hot water supply heat source circuit D. The discharge-side piping 140 connected to the air conditioning compressor 101 branches between the air conditioning compressor 101 and the four-way valve 102. One (discharge-side piping 140a) is connected to the four-way valve 102, and the other (discharge-side piping 140b) is connected to the air conditioning discharged gas piping 125.

Moreover, in the heat source unit A₂, there is provided a bypass piping 141 for connecting the connection piping between the four-way valve 102 and the outdoor heat exchanger 103 with a connection piping serving as another refrigerant flow path of the four-way valve 102 (a refrigerant flow path where the four-way valve 102 and the outdoor heat exchanger 103 are not directly connected). That is, the bypass piping 141 is provided for directly connecting the four-way valve 102 and the outdoor heat exchanger 103. In the bypass piping 141, a second heat source unit throttle means 128 and the check valve 105e are arranged from the upstream side of the flow of the air conditioning refrigerant.

Th first heat source unit throttle means 124 and the second heat source unit throttle means 128 function as a decompression valve or an expansion valve, and decompresses the air conditioning refrigerant to expand it. The first heat source unit throttle means 124 and the second heat source unit throttle means 128 is preferably constituted by means whose degree of opening is variably controllable, such as precise flow rate control means by an electronic expansion valve and inexpensive refrigerant flow rate regulating means such as a capillary for example. The check valve 105a permits the flow of air conditioning refrigerant only in a predetermined direction (the direction from the four-way valve 102 toward the outdoor heat exchanger 103).

### [Relay Unit E₂]

The relay unit E₂ has a function of connecting the cooling indoor unit B, the heating indoor unit C, and the hot water supply heat source circuit D to the heat source unit A₂, respectively. The relay unit E₂ also has a function of alternatively opening/closing either of the valve means 109a and the valve means 109b in the first distribution portion 109, and thereby determining whether the indoor heat exchanger 118 and the refrigerant-refrigerant heat exchanger 41 to be connected are the cooling unit (water cooler) or the heating unit (water heater). The relay unit E₂ differs from the relay unit E according to Embodiment 1 in that it is provided with only the first distribution portion 109, and not provided with the gas-liquid separator 108, the second distribution portion 110, the first internal heat exchanger 111, the first relay unit throttle means 112, the second internal heat exchanger 113, and the second relay unit throttle means 114.

In the first distribution portion 109, the connection piping 133 and the connection piping 135 are branched into two. One (the connection piping 133b and the connection piping 135b) is connected to the air conditioning discharged gas piping 125, and other (the connection piping 133a and the connection piping 135a) is connected to the air conditioning suction gas piping 126. In the relay unit E₂, since there is provided no second distribution portion 110, neither of the connection piping 134 and the connection piping 136 are branched, and they are connected to an air conditioning liquid piping 127.

Here, the cooling-based operation of the air conditioning refrigeration cycle 1a will be described.
First, a part of the air conditioning refrigerant turned into a high-temperature and high-pressure state by the air conditioning compressor 101 is led to the air conditioning discharged gas piping 125 and flows into the relay unit E2, while the other part is led to the four-way valve 102. The air conditioning refrigerant led to the air conditioning discharged gas piping 125 is distributed into circuits with the valve means 109b being opened. Here, the air conditioning refrigerant is adapted to flow into the heating indoor unit C and the hot water supply heat source circuit D. The air conditioning refrigerant flowed into the heating indoor unit C radiates heat in the indoor heat exchanger 118, decompressed by the air conditioning throttle means 117, and meets in the air conditioning liquid piping 127. On the other hand, the air conditioning refrigerant flowed into the hot water supply heat source circuit D radiates heat in the refrigerant-refrigerant heat exchanger 41, decompressed by the hot water supply heat source throttle means 119, and meets with the air conditioning refrigerant flowed out from the heating indoor unit C in the air conditioning liquid piping 127.

Meanwhile, the air conditioning refrigerant led to the four-way valve 102 flows into the outdoor heat exchanger 103 via the four-way valve 102. In the outdoor heat exchanger 103, the air conditioning refrigerant flowed therein exchanges heat with outdoor air and radiates heat. The air conditioning refrigerant flowed out from the outdoor heat exchanger 103 is decompressed by the first heat source unit throttle means 124 and meets in the air conditioning liquid piping 127. The air conditioning refrigerant that met in the air conditioning liquid piping 127 is distributed to circuits with the valve means 109a opened. Here, the air conditioning refrigerant is adapted to flow into the cooling indoor unit B. The air conditioning refrigerant flowed into the cooling indoor unit B is expanded into a low-temperature and low-pressure state by the air conditioning throttle means 117, evaporates in the indoor heat exchanger 118, and meets in the air conditioning suction gas piping 126 via the valve means 109a. Part of the air conditioning refrigerant that met in the air conditioning suction gas piping 126 returns to the air conditioning compressor 101 via the accumulator 104, while the other part is led to the bypass piping 141.

Next, the heating-based operation of the air conditioning refrigeration cycle 1a will be described.

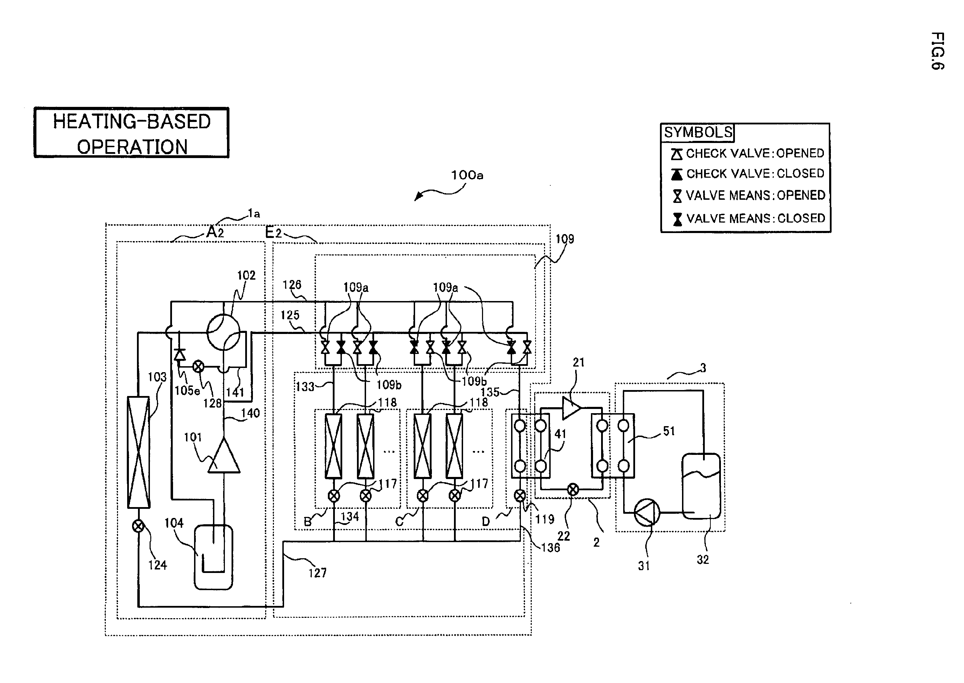

Fig. 6 is a refrigerant circuit diagram showing a refrigerant circuit configuration (especially, the refrigerant circuit configuration at the time of the heating-based operation) in the air conditioning-hot water supply combined system 100a according to Embodiment 2 of the present invention. With reference to Fig. 6, description is made of the heating-based operation of the air conditioning refrigeration cycle 1a in the air conditioning-hot water supply combined system 100a. First, most part the air conditioning refrigerant turned into a high-temperature and high-pressure state is led to the air conditioning discharged gas piping 125, and distributed to circuits with the valve means 109b opened. Here, the air conditioning refrigerant is adapted to flow into the heating indoor unit C and the hot water supply heat source circuit D.

The air conditioning refrigerant flowed into the heating indoor unit C radiates heat in the indoor heat exchanger 118, being decompressed by the air conditioning throttle means 117, and meets in the air conditioning liquid piping 127. On the other hand, the air conditioning refrigerant flowed into the hot water supply heat source circuit D radiates heat in the refrigerant-refrigerant heat exchanger 41, being decompressed by the hot water supply heat source throttle means 119, and meets with the air conditioning refrigerant flowed out from the heating indoor unit C in the air conditioning liquid piping 127. The air conditioning refrigerant met in the air conditioning liquid piping 127 is distributed to circuits with the valve means 109a opened and circuits led to the outdoor heat exchanger 103. Here, the air conditioning refrigerant is adapted to flow into the cooling indoor unit B and the outdoor heat exchanger 103.

The air conditioning refrigerant distributed into the circuits whose valve means 109a is open, is expanded into a low-temperature and low-pressure state by the air conditioning throttle means 117, evaporates in the indoor heat exchanger 118, and meets in the air conditioning suction gas piping 126. On the other hand, the air conditioning refrigerant led into the outdoor heat exchanger 103 is expanded into a low-temperature and low-pressure state by the first heat source unit throttle means 124, evaporates in the indoor heat exchanger 103, being led into the bypass piping 141, and meets with the discharged gas refrigerant that has passed through the second heat source unit throttle means 128 and the check valve 105a. This air conditioning refrigerant meets with the air conditioning refrigerant that led into the cooling indoor unit B via the four-way valve 102 in the air conditioning suction gas piping 126. The air conditioning refrigerant that met in the air conditioning suction gas piping 126 returns to the air conditioning compressor 101 via the accumulator 104.

The operation of the hot water supply refrigeration cycle 2 does not differ4 irrespective of the operating state of the air conditioning refrigeration cycle 1a, i.e., irrespective of whether the air conditioning refrigeration cycle 1a is performing the cooling-based operation or the heating-based operation. The configuration and operation of the hot water supply refrigeration cycle 2 is as explained in Embodiment 1. The operation of the hot water supply water circulation cycle 3 does not differ by the operating conditions of the air conditioning refrigeration cycle 1a, that is, whether in the cooling-based operation or in the heating-based operation. Its configuration and operation is what is described in Embodiment 1.

The check valve 105e may be constituted by valve means such as a solenoid valve so as to more reliably perform switchover between refrigerant flow paths. Moreover, the air conditioning refrigerant circulating in the air conditioning refrigeration cycle 1a is not particularly limited in kinds. For example, as in the case of Embodiment 1, the R410A may be used. Furthermore, any of natural refrigerants may be adopted such as carbon dioxide (CO₂) hydrocarbon, and helium; alternative refrigerants containing no chrome such as HFC410A, HFC407C, HFC404A; or fluorocarbon refrigerants such as R22 or R134a, which is used in existing products,.

While the air conditioning refrigeration cycle 1a and the hot water supply refrigeration cycle 2 have an independent refrigerant circuit configuration, the circulating refrigerants may be of the same kind or not. In either case, heat exchange is performed in the refrigerant-refrigerant heat exchanger 41 and the heat medium-refrigerant heat exchanger 51 without being mixed with each other. Moreover, in Embodiment 2, as shown in Figs. 5 and 6, the case where the cooling indoor unit B and the heating indoor unit C are equipped with two or more indoor heat exchangers 118 is illustrated, but it is not limited thereto. For example, in the case of the cooling-based operation shown in Fig. 5, the indoor heat exchangers 118 in the cooling indoor unit B may be one, and the indoor heat exchangers 118 in the heating indoor unit C may be zero or one. Moreover, for example, in the case of the heating-based operation shown in Fig. 6, the indoor heat exchangers 118 in the cooling indoor unit B and the heating indoor unit C may be either zero or one.

In the air conditioning-hot water supply combined system 100a according to Embodiment 2, the hot water supply load system is constituted by a binary cycle (the air conditioning refrigeration cycle 1a and the hot water supply refrigeration cycle 2). Therefore, when meeting a demand for high-temperature hot water supply (for example, hot water of 80°C or above), it suffices to set the temperature of the radiator (heat medium-refrigerant heat exchanger 51) in the hot water supply refrigeration cycle 2 to a high temperature (for example, condensation temperature 85°C). Accordingly, when there is a demand for a heating load besides the demand for the hot water supply, there is no need to increase the condensation temperature (for example, 50°C) of the heating indoor unit C, which allows reduction in energy consumption.

### Embodiment 3

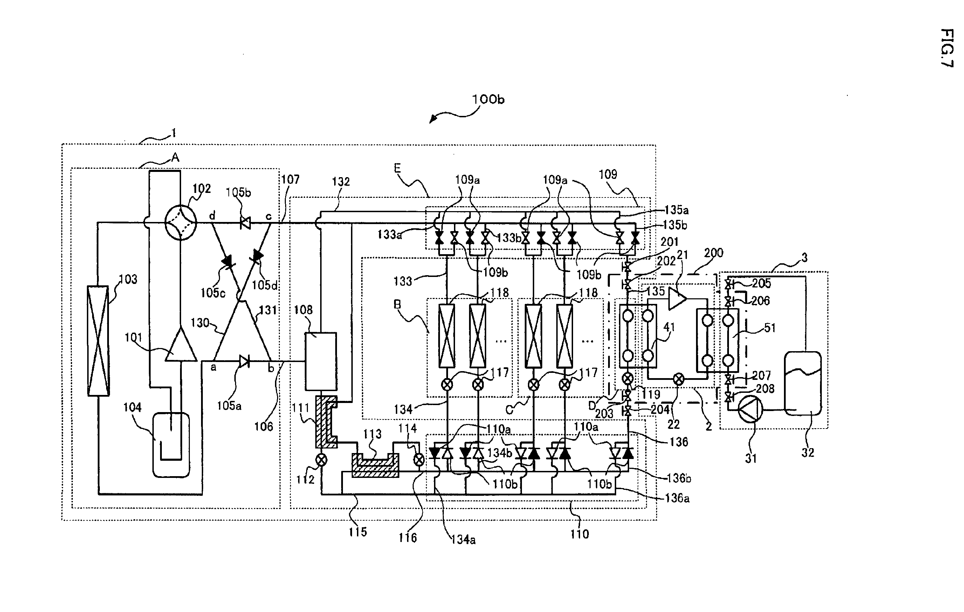

Fig. 7 is a refrigerant circuit diagram showing a refrigerant circuit configuration of an air conditioning-hot water supply combined system 100b according to Embodiment 3 of the present invention. With reference to Fig. 7, description is made of the refrigerant circuit configuration of the air conditioning-hot water supply combined system 100b. The air conditioning-hot water supply combined system 100b is installed in a building, a condominium building or the like, and is operable to concurrently provide a cooling load, a heating load, and a hot water supply load by utilizing a refrigeration cycle circulating a refrigerant (air conditioning refrigerant). Here, the description of Embodiment 3 is focused on its differences from the above-described Embodiments 1 and 2. The same parts as those in Embodiments 1 and 2 are designated by the same symbols, and description thereof is omitted.

In Fig. 7, the state of the four-way valve 102 in the cooling-based operation is indicated by a solid line, and the state thereof in the heating-based operation is indicated by a broken line. Besides, in Fig. 7, the hot power supply refrigeration cycle cabinet 200 is indicated by a chain line. That is, part of the air conditioning refrigeration cycle 1, the hot water supply refrigeration cycle 2, and part of the hot water supply water circulation cycle 3 are accommodated in the hot power supply refrigeration cycle cabinet 200. In addition, in order to allow the mounting/demounting of the hot power supply refrigeration cycle cabinet 200, connection valves are installed to the connection portion between the air conditioning refrigeration cycle 1 and the hot water supply refrigeration cycle 2, and the connection portion between the hot water supply refrigeration cycle 2 and the hot water supply water circulation cycle 3.

The connection portions between the air conditioning refrigeration cycle 1 and the hot water supply refrigeration cycle 2, that is, the connection piping 135 and the connection piping 136 are provided with two connection valves (connection valve 201 and connection valve 202, and connection valve 203 and connection valve 204). The connection valve 202 and the connection valve 203 are installed inside the hot power supply refrigeration cycle cabinet 200, while the connection valve 201 and the connection valve 204 are installed outside the hot power supply refrigeration cycle cabinet 200.

The connection portions between the hot water supply refrigeration cycle 2 and the hot water supply water circulation cycle 3, that is, a water piping connecting the heat medium-refrigerant heat exchanger 51 and the hot water storage tank 32, and a water piping connecting the water circulation pump 31 and the heat medium-refrigerant heat exchanger 51, respectively, have two connection valves (connection valves 205 and 206; and connection valves 207 and 208). The connection valves 206 and 207 are installed inside the hot power supply refrigeration cycle cabinet 200, while the connection valves 205 and 208 are installed outside the hot power supply refrigeration cycle cabinet 200.

That is, the air conditioning-hot water supply combined system 100b according to Embodiment 3 differs in that the mountable/demountable hot power supply refrigeration cycle cabinet 200 are provided in addition to the configuration of the air conditioning-hot water supply combined system 100 according to Embodiment 1. Configurations other than the hot power supply refrigeration cycle cabinet 200, the connection valves 201 to 208, (namely, the heat source unit A, the cooling indoor unit B, the heating indoor unit C, the hot water supply heat source circuit D, the relay unit E, the air conditioning refrigeration cycle 1, the hot water supply refrigeration cycle 2, and the hot water supply water circulation cycle 3) have configurations similar to those in Embodiment 1.

By configuring the air conditioning-hot water supply combined system 100b in this way, the air conditioning-hot water supply combined system 100b according to the present invention can be constituted as an alternate of a general-purpose indoor unit (cooling indoor unit B, heating indoor unit C, or the like) for general-purpose air conditioning refrigeration cycle. Therefore, it is possible to suppress development investment for a special-purpose air conditioning refrigeration cycle and to constitute the air conditioning-hot water supply combined system 100b using existing air conditioning refrigerant cycles, to thereby more easily achieve energy saving.

### Embodiment 4

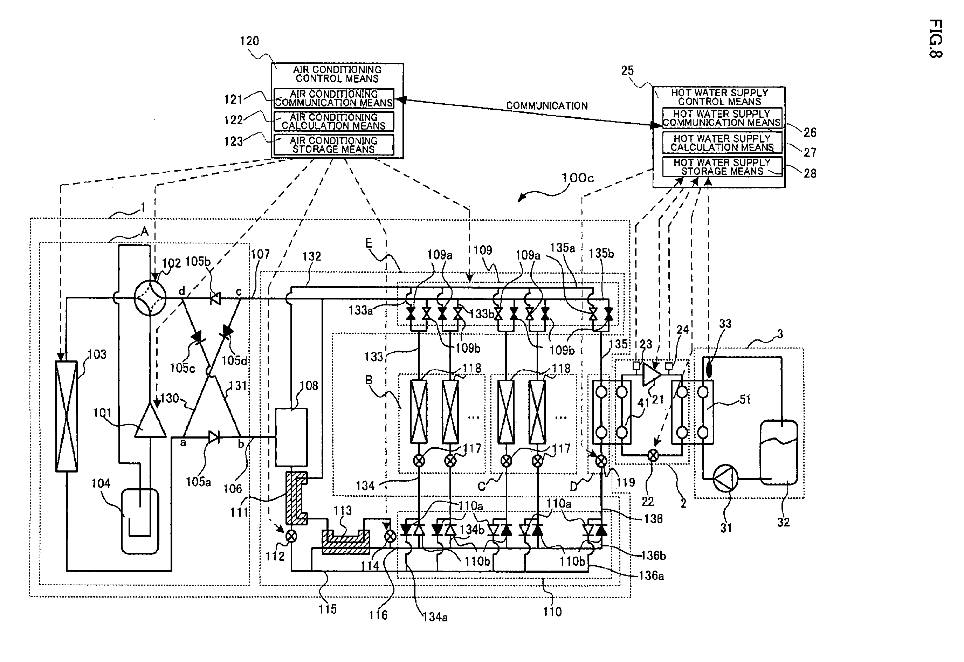

Fig. 8 is a refrigerant circuit diagram showing a refrigerant circuit configuration of an air conditioning-hot water supply combined system 100c according to Embodiment 4 of the present invention. With reference to Fig. 8, description is made of a refrigerant circuit configuration of the air conditioning-hot water supply combined system 100c. The air conditioning-hot water supply combined system 100c is installed in a building, a condominium building or the like, and is operable to concurrently provide a cooling load, a heating load, and a hot water supply load by utilizing a refrigeration cycle circulating a refrigerant (air conditioning refrigerant). Here, the description of Embodiment 4 is focused on its differences from the above-described Embodiments 1 to 3. The same parts as those in Embodiments 1 to 3 are designated by the same symbols, and description thereof is omitted.

In Fig. 8, the state of the four-way valve 102 in the cooling-based operation is indicated by a solid line, and the state thereof in the heating-based operation is indicated by a broken line. As shown in Fig. 8, the air conditioning-hot water supply combined system 100c according to Embodiment 4 is basically the same as that air conditioning-hot water supply combined system 100 according to Embodiment 1, but differs in that a hot water supply low-pressure side pressure detecting means 23, a hot water supply higher-pressure side pressure detection means 24, a hot water delivery temperature detection means (heat medium temperature detection means) 33, the hot water supply control means 25, and an air conditioning control means 120 are provided.

The hot water supply low-pressure side pressure detecting means 23 is provided on the suction side of the hot water supply compressor 21, and used for detecting the pressure of the air conditioning refrigerant to be sucked into the hot water supply compressor 21. The hot water supply high-pressure side pressure detection means 24 is provided on the discharge side of the hot water supply compressor 21, and used for detecting the pressure of the air conditioning refrigerant discharged from the hot water supply compressor 21. The hot water delivery temperature detection means 33 is provided on the water outlet side of the heat medium-refrigerant heat exchanger 51, and to detect the temperature of water stored in the hot water storage tank 32 to be delivered. Information detected by the hot water supply low-pressure side pressure detecting means 23, the hot water supply higher-pressure side pressure detection means 24, and the hot water delivery temperature detection means 33 is outputted to the hot water supply control means 25.

The hot water supply control means 25 is constituted of the hot water supply communication means 26, hot water supply calculation means 27, and hot water supply storage means 28. The hot water supply control means 25 causes the hot water supply storage means 28 to store at least one out of the ON/OFF state of the hot water supply refrigeration cycle 2, that is detection information from the above-described detection means, such as the ON/OFF state of the hot water supply compressor 21, and its frequency and discharge temperature; the high-pressure side pressure, the low-pressure side pressure, the condensation temperature, the evaporation temperature of the hot water supply refrigerant circulating in the hot water supply refrigeration cycle 2; the entering water temperature, the delivery hot water temperature of the heat medium-refrigerant heat exchanger 51; and the degree of throttling of the hot water supply throttle means 22 and the hot water supply heat source throttle means 119 (the number of pulses when an electronic expansion valve is used). On the basis of stored information, the hot water supply calculation means 27 performs calculation and performs various kinds of control.

The air conditioning control means 120 is constituted of the air conditioning communication means 121, the air conditioning calculation means 122, and the air conditioning storage means 123. The air conditioning control means 120 and the hot water supply control means 25 can perform control in cooperation with each other by intercommunicating information via the hot water supply communication means 26 of the hot water supply control means 25, and the air conditioning communication means 121 of the air conditioning control means 120. In this manner, by allowing the two control means to intercommunicate, a higher-degree and more stable energy-saving system can be constructed.

The air conditioning control means 120 causes the air conditioning storage means 123 to store at least one out of the ON/OFF state of the air conditioning refrigeration cycle 1, that is detection information from the various detection means (not shown), such as the ON/OFF state of the air conditioning compressor 101, and its frequency and discharge temperature; the high-pressure side pressure, the low-pressure side pressure, the condensation temperature, the evaporation temperature of the air conditioning refrigerant circulating in the air conditioning refrigeration cycle 1; the fan air volume, the inlet temperature, the outlet temperature, the intake air temperature of the outdoor heat exchanger 103; the changeover state of the four-way valve 102; the degrees of throttling of the first relay unit throttle means 112, the second relay unit throttle means 114, and the degree of throttling of the air conditioning throttle means 117; the changeover states of the valve means 109a and the valve means 109b; and the fan air volume and indoor unit intake air temperature of the cooling indoor unit B and the heating indoor unit C. On the basis of stored information, the hot water supply control means 120 causes the air conditioning calculation means 122 performs calculation and performs various kinds of control.

Concrete control behavior performed in this embodiment will be described below.
For example, when the ON/OFF state of the air conditioning compressor 101 is communicated from the air conditioning control means 120 to the hot water supply control means 25, and in synchronization with the ON/OFF timing of the hot water supply compressor 21 is controlled, there is no need to perform a useless operation of the hot water supply compressor 21, whereby energy saving can be achieved. Furthermore, after the start-up of the air conditioning compressor 101, by actuating the hot water supply compressor 21 after waiting for the air conditioning refrigeration cycle 1 to be stabilized, the hot water supply refrigerant in the air conditioning refrigeration cycle 2 can sufficiently absorb heat of the air conditioning refrigeration cycle 1 and evaporate when passing through the refrigerant-refrigerant heat exchanger 41. This allows the hot water supply refrigeration cycle 2 to stably operate, thereby enhancing the reliability of system, and ensuring energy saving.

When, because of failure of the air conditioning compressor 101 and excessively small load, an operation is once interrupted and restarts, and when the hot water supply compressor 21 is operating at a high frequency, if the hot water supply compressor 21 is not controlled to operate together with the air conditioning compressor 101 and when the hot water supply compressor 21 is operating at a high frequency, the low-pressure side pressure of the hot water supply refrigeration cycle 2 may cause abnormal lowering during the stoppage of the air conditioning compressor 101, thereby bringing about a large heat shock when the air conditioning compressor 101 resumes its operation. This being the case, when the air conditioning compressor 101 stops during operation of the hot water supply compressor 21, for example, by adding an item indicating that the low-pressure side pressure of the hot water supply refrigeration cycle 2 is to fall within a predetermined range, to a control target for the hot water supply compressor 21, it is possible to prevent a large heat shock and enhance the reliability of the system for longer time period, to thereby ensure energy saving.

Furthermore, in the air conditioning-hot water supply combined system 100c according to Embodiment 4, in a state where water in the hot water storage tank 32 is at a low temperature, the compression ratio of the hot water supply compressor 21 is prone to become small, thereby causing a risk of stalling of the hot water supply compressor 21. Therefore, on the basis of outputs of the hot water supply lower-pressure side pressure detecting means 23 and the hot water supply high-pressure side pressure detection means 24 of the hot water supply refrigeration cycle 2 stored by the hot water supply control means 25, when the compression ratio of the hot water supply compressor 21 calculated by the hot water supply calculation means 27 falls below a predetermined range, the hot water supply refrigeration cycle 2 is controlled in the direction of increasing the compression ratio by throttling the hot water supply throttle means 22, thereby allowing to enhance the reliability of the system, and ensuring energy conservation.

Specifically, by connecting the hot water supply control means 25 and the hot water supply throttle means 22 by wire or by radio, a signal may be directly provided (for example, when the electronic expansion valve is used, a signal for reducing the pulses is sent). Alternatively, the hot water supply throttle means 22 may be indirectly throttled by increasing a supercooling degree of the hot water supply refrigerant at the outlet of the heat medium-refrigerant heat exchanger 51, or the superheating degree of the hot water supply refrigerant at the outlet of the refrigerant-refrigerant heat exchanger 41 that are assumed to be control target values of the hot water supply throttle means 22 to be larger than values when the compression ratio of the hot water supply refrigeration cycle 2 is within a predetermined range.

Moreover, by providing the hot water supply heat source throttle means 119 with a control signal for throttling, the evaporation heat source of the hot water supply refrigeration cycle 2 decreases to thereby reduce the pressure on the low-pressure side of the hot water supply refrigeration cycle 2, whereby the compression ratio can be increased. Specifically, by connecting the hot water supply control means 25 and the hot water supply heat source throttle means 119 by wire or by radio, a signal may be directly provided (for example, when the electronic expansion valve is used, a signal for reducing the pulses is sent). Alternatively, the hot water supply heat source throttle means 119 may be indirectly throttled by increasing the supercooling degree of the hot water supply refrigerant at the outlet of the refrigerant-refrigerant heat exchanger 41, which is assumed to be an control target value of the hot water supply heat source throttle means 119 to be larger than the value when the compression ratio of the hot water supply refrigeration cycle 2 is within a predetermined range.

Here, the case in which the control of the hot water supply heat source throttle means 119 is performed by connecting with the hot water supply control means 25 by wire or by radio is illustrated, but it is not limited thereto. The control may be performed by connecting with the air conditioning control means 120. Furthermore, for example, by adhering temperature detection means onto piping between the hot water supply throttle means 22 and the refrigerant-refrigerant heat exchanger 41 and detecting the evaporation temperature, a saturated pressure calculated from the output may be substituted for the hot water supply lower-pressure side pressure detecting means 23. Moreover, although it is difficult when the heat medium-refrigerant heat exchanger 51 is a plate heat exchanger, however, if the condensation temperature is detectable by the temperature detection means as in the case in which in a double piping heat exchanger, a refrigerant is passed through outside the hot water supply higher-pressure side pressure detection means 24 can detect the condensation temperature by the temperature detection means, and a saturated pressure calculated from the output may be substituted.

Regarding the control of the hot water supply compressor 21, because controlling the output of the hot water delivery temperature detection means 33 as a target value directly follows user's demand, there will be no useless operation, leading to energy saving. However, for the piping on the water side of the heat medium-refrigerant heat exchanger 51, stainless steel is assumed to be adopted from the viewpoint of anticorrosion, so that, in this case, in order to detect the delivery hot water temperature, a method in which temperature detection means is adhered to the outside of the piping of the delivery hot water portion cannot be adopted. Therefore, it is necessary to directly detect the water temperature inside the piping, which results in an increase in cost, and poses an obstacle to the introduction of an energy-saving system.

However, if the performance of the heat medium-refrigerant heat exchanger 51 is known in advance, it is known that the hot water delivery temperature can be estimated with some degree of accuracy from the condensation temperature of the hot water supply refrigerant that is exchanging heat with water. For example, it is ascertained by a simulation that, in some combination, the difference in the hot water delivery temperature and the condensation temperature of the hot water supply refrigeration cycle 2 is 6°C, and that even if water circulation amount is decreased by a factor of a quater, the difference value is reduced down to only 3°C. Therefore, even if the hot water delivery temperature is not directly measured, it is possible to estimate the hot water delivery temperature with a certain degree of accuracy on the basis of an output of the hot water supply higher-pressure side pressure detection means 24 in the hot water supply refrigeration cycle 2, and to treat the estimated value as a control target value of the hot water supply compressor 21.

That is, on the basis of at least one value out of the high-pressure side pressure of the hot water supply refrigeration cycle 2, the condensation temperature, and a temperature at a position from the outlet of the hot water supply compressor 21 to the inlet of the heat medium-refrigerant heat exchanger 51, the hot water supply control means 25 can estimate the temperature (hot water delivery temperature) of a heat medium (here, water) at the outlet of the heat medium-refrigerant heat exchanger 51, and can control the hot water supply compressor 21 so that the above-described estimated value approaches a predetermined target value, thereby allowing the introduction of an energy-saving system without increasing cost.

In a state in which the temperature of the water in the hot water storage tank 32 is low, the heat change amount in the heat medium-refrigerant heat exchanger 51 tends to increase, for example, when the heating indoor unit C is in operation concurrently, a necessary heating capability may not sometimes be obtained on the side of heating indoor unit C.

In the system according to the present embodiment, for example, in the case in which the temperature of the water in the hot water storage tank 32 is low, by controlling the hot water supply compressor 21 so as to reduce the upper limit of the frequency, the heating capability of the heating indoor unit C can be ensured, thereby allowing the realization of a stable energy-saving system without impairing user's comfort.
Moreover, in this embodiment, when not a single heating indoor unit C is operating, there is no need to concern about capability deficiency of the heating indoor unit C, and therefore, it is possible to perform control to inhibit reduction in the upper limit of the frequency of the hot water supply compressor 21, thereby allowing making the most of the capability of the system. Here, the temperature of water in the hot water storage tank 32 may be estimated using an entering water temperature or a leaving water temperature.

The system according to this embodiment is a system in which the air conditioning refrigeration cycle concurrently covers a heating load and a cooling load to thereby reduce exhaust heat, whereby energy saving is implemented. Here, the air conditioning load such as a cooling load or a heating load depends upon a user's real-time demand, whereas the hot water supply load can be covered by the heat stored in the hot water storage tank 32. Therefore, a system in which the air conditioning refrigeration cycle and a hot water supplying refrigerant cycle intercommunicates as the present embodiment, would be able to perform operation to minimize exhaust heat by operating the hot water supply refrigeration cycle 2 in synchronization with an operation of the cooling indoor unit B.

When attempting to minimize exhaust heat, by the air conditioning refrigeration cycle and the hot water supplying refrigeration cycle intercommunicating therebetween, performing control so that the heat exchange amount in the outdoor heat exchanger 103 in the air conditioning refrigeration cycle deceases, allows an achievement of the minimization of exhaust heat. For example, when the outdoor heat exchanger 103 is an air heat exchanger, controlling the hot water supply compressor 21 to reduce the fan wind amount enables implementation of the minimization of exhaust heat.

## Claims

1. An air conditioning-hot water supply combined system, comprising:
an air conditioning refrigeration cycle that circulates an air conditioning refrigerant in a first refrigerant circuit where an air conditioning compressor, flow path changeover means, an outdoor heat exchanger, an indoor heat exchanger, and air conditioning throttle means are connected in series, and where a refrigerant-refrigerant heat exchanger and hot water supply heat source throttle means are connected in series and in parallel to said indoor heat exchanger and said air conditioning throttle means; and
a hot water supply refrigeration cycle that circulates a hot water supply refrigerant in a second refrigerant circuit where a hot water supply compressor, a heat medium-refrigerant heat exchanger, hot water supply throttle means, and said refrigerant-refrigerant heat exchanger are connected in series,
wherein said air conditioning refrigeration cycle and said hot water supply refrigeration cycle are connected so that said air conditioning refrigerant and said hot water supply refrigerant exchange heat in said refrigerant-refrigerant heat exchanger.

2. The air conditioning-hot water supply combined system of Claim 1, further comprising:
hot water supply control means that has hot water supply communication means for communicating information by wire or by radio, and that controls an operation of the hot water supply refrigeration cycle in response to a state of said hot water supply refrigeration cycle; and
air conditioning control means that has air conditioning communication means for communicating information by wire or by radio, and that controls an operation of the air conditioning refrigeration cycle in response to a state of said air conditioning refrigeration cycle,
wherein said hot water supply control means and said air conditioning control means cooperatively control the operation of said hot water supply refrigeration cycle and the operation of said air conditioning refrigeration cycle by said hot water supply communication means and said air conditioning communication means communicating with each other.

3. The air conditioning-hot water supply combined system of Claim 2, further comprising:
at least one out of pressure detection means for detecting a pressure on a high-pressure side and temperature detection means for detecting a condensation temperature, in said hot water supply refrigeration cycle and
at least one out of pressure detection means for detecting a pressure on a low-pressure side and temperature detection means for detecting an evaporation temperature, in said hot water supply refrigeration cycle,
wherein said hot water supply control means and said air conditioning control means cooperatively control the operation of said hot water supply refrigeration cycle and the operation of said air conditioning refrigeration cycle by intercommunicating detection information from each detection means.

4. The air conditioning-hot water supply combined system of Claim 2 or 3, wherein said hot water supply control means calculates a compression ratio of said hot water supply compressor from detection information obtained by each detection means, and controls said hot water supply throttle means so that a calculation result of the compression ratio falls within a predetermined range.

5. The air conditioning-hot water supply combined system of Claim 4, wherein said hot water supply control means controls said hot water supply heat source throttle means on the basis of said calculation result.

6. The air conditioning-hot water supply combined system of any one of Claims 2 to 5, further comprising:
heat medium temperature detection means for detecting a temperature of a heat medium at an outlet side of said heat medium-refrigerant heat exchanger,
wherein, on the basis of information from said heat medium temperature detection means, said hot water supply control means controls said hot water supply compressor so that the temperature of the heat medium at the outlet side of said heat medium-refrigerant heat exchanger approaches a predetermined target value.

7. The air conditioning-hot water supply combined system of any one of Claims 2 to 6, wherein, on the basis of at least one of a pressure on a high-pressure side, a condensation temperature, and a temperature at a position from an outlet of said hot water supply compressor to an inlet of the heat medium-refrigerant heat exchanger, said hot water supply control means estimates a temperature of a heat medium at an outlet side of said heat medium-refrigerant heat exchanger, and controls said hot water supply compressor so that an estimated value of the temperature of the heat medium approaches a predetermined target value.

8. The air conditioning-hot water supply combined system of any one of Claims 2 to 7, wherein an upper limit value of frequency of said hot water supply compressor is changed on the basis of a temperature of a heat medium at an outlet side of said heat medium-refrigerant heat exchanger.

9. The air conditioning-hot water supply combined system of any one of Claims 2 to 8, wherein, only when said indoor heat exchanger is operating, an upper limit value of frequency of said hot water supply compressor is changed on the basis of a temperature of a heat medium at an outlet side of said heat medium-refrigerant heat exchanger.

10. The air conditioning-hot water supply combined system of any one of Claims 2 to 9, wherein said hot water supply compressor is controlled so that a heat exchange amount in said outdoor heat exchanger falls within a predetermined range.

11. The air conditioning-hot water supply combined system of any one of Claims 1 to 10, further comprising:
a hot water supply water circulation cycle, in which a water circulation pump, said heat medium-refrigerant heat exchanger, and a hot water storage tank are connected in series, and in which water is circulated as a heat medium,
wherein said hot water supply refrigerant and said water exchange heat in said heat medium-refrigerant heat exchanger to heat said water.

12. The air conditioning-hot water supply combined system of any one of Claims 1 to 11, wherein each device constituting said hot water supply refrigeration cycle is accommodated in the same cabinet.

13. The air conditioning-hot water supply combined system of any one of Claims 1 to 12, wherein, for said hot water supply refrigerant, a refrigerant having a critical temperature of 60°C or more is adopted.
